# EUROPEAN PATENT SPECIFICATION

(11) **EP 2 456 245 B1**
(45) Date of publication and mention of the grant of the patent: **11.09.2013**
(21) Application number: 10191854.8
(22) Date of filing: 19.11.2010
(51) Int. Cl.: H04W 12/06, H04L 29/06

(54) **System, devices and method for secure authentication**
System, Vorrichtungen und Verfahren zur sicheren Authentifizierung
Système, dispositifs et procédé pour authentification sécurisée

(43) Date of publication of application: 23.05.2012
(73) Proprietor: BlackBerry Limited, Waterloo ON N2L 3W8 (CA)
(72) Inventor: Pasquero, Jerome, Waterloo Ontario N2L 3L3 (CA); Walker, David Ryan, Waterloo Ontario N2L 3L3 (CA)
(74) Representative: Moore, Barry

(56) References cited:
- US-A1- 2002 169 988

## Description

This invention relates generally to a system and computer-implemented method for authenticating a user. In particular, this invention relates to remote authentication of a user.

A user accessing an on-line resource is typically required to authenticate their identity by entering log-in credentials, typically consisting of a user credential, such as a usemame, and an associated password. The on-line resource compares the credentials with its records and, if there is a match, authenticates the user to allow access to the on-line resource.

In practice, this requires the user to either remember different sets of credentials, one set associated with each on-line resource, re-use log-in credentials for multiple on-line resources or record the credentials and associated on-line resource identifying information in a safe location.

Current methods of improving this process typically relate to a web browser of a computing device remembering a history of the user and auto-populating the authentication fields when prompted by an on-line resource. This approach suffers from a lack of security in that the computing device, which is accessible on a network, is storing the authentication where it could be accessed by an attacker if the security of the computing device were breached.

Another disadvantage of this approach is that a user still has to remember their credentials when using a different computing device that lacks the history, or if the history of the device has been cleared. This may require retrieving information from each on-line resource via an email account, or some other means where a user has forgotten their credentials. Since the browser is auto-populating the log-in fields, it is more likely that a user will forget their credentials.

Another disadvantage of this method is that it encourages users to maintain a static set of credentials and to use simple user credentials and associated passwords to assist their memory.
US Published Patent Application No. 2002/169988 discloses a method and apparatus that provides user authentication by communicating primary authentication information, such as user identification data and/or password data to an authentication unit via a primary channel such as over the Internet. An authentication code is generated by the authentication unit on a per session basis and is sent to a destination unit via a first secondary channel during the session. The destination unit then retransmits the authentication code, on a second secondary channel, to the first unit in a way that is transparent to a user of the first unit. The first device then send the received re-transmitted authentication code back to the authentication unit via the primary channel during the session.

There is a need for a system, devices and method for avoiding limitations in the prior art.

### GENERAL

A system, devices and method may be provided for secure authentication of a user accessing an on-line resource hosted by a server.

In an embodiment a system may be provided for authenticating a user requesting access, through a computing device connected to a network, to an on-line resource hosted by a server in communication with the network. In an embodiment, the system may comprise: a mobile communication device connected to a wireless network, the mobile communications device further operative to communicate over a short-range communications link; an authentication server connected to the network and in communication with the mobile communications device over the wireless network; wherein the authentication server is operative to receive an on-line resource access request through the network, process the request and, if the request is verified, forward an authentication to the mobile communications device using the wireless network and return decryption security information related to the authentication over the network in response to the request; and, wherein the mobile communications device is connected to the wireless network and is operative to receive the authentication over the wireless network, process the authentication and forward the processed authentication to the computing device over the short-range communications link; the computing device operative to receive the on-line resource access request from the user and to forward the request to the authentication server and operative to communicate over the short-range communications link and to receive the processed authentication over the short-range communications link from the mobile communications device; and wherein the computing device is further operative to receive the decryption security information over the network and to process the processed authentication using the decryption security information to obtain on-line resource log-in credentials and to forward the on-line resource log-in credentials to the server over the network to access the on-line resource.

In an aspect, the system may further comprise the server connected to the network and operative to host the on-line resource; the server further operative to receive an on-line resource access request from a computing device through the network, process the request and forward the request to an authentication server; the server further operative to receive the decryption security information from the authentication server and the processed authentication from the computing device; the server further operative to process the processed authentication using the decryption security information to authenticate the request.

In an embodiment, a mobile communications device may be provided. The mobile communications device may comprise a communications subsystem for communicating over a wireless network; a short-range communications subsystem for short-range communications; a processor, in communication with the communications subsystem and the short-range communications subsystem; a secure memory store in communication with the processor, the processor operative to enable the device to: receive an authentication through the communications subsystem, the authentication comprising information to identify on-line-resource log-in credentials stored in the secure memory store and including instructions comprising encryption security information to be executed by the device; process the authentication and execute the instructions to render the processor further operative to process the information to locate the identified credentials and secure the identified credentials using the encryption security information to create a processed authentication, and preferably wherein the processor is further operative to decrypt the identified credentials from a first encryption state when stored in the secure memory store and to encrypt the decrypted identified credentials using the encryption security information into a second encrypted state; and to forward the processed authentication to a computing device through the short-range communications subsystem.

In an aspect the device may further comprise: a user input interface; and, the processor operative to execute the instructions to request and require user input through the user input interface, before the device forwards the processed authentication. The processor may be further operative to receive the user input through the user input interface, compare the user input with a pre-defined user input stored on the device and forward the processed authentication if the user input matches the pre-defined user input.

In an embodiment, an authentication server may be provided, the authentication server comprising: a communication subsystem in communication with a network and a wireless network; a data store; a processor, in communication with the communication subsystem and the data store, the processor operative to enable the authentication server to receive an on-line resource access request from a computing device through the network, compare the request with information maintained within the data store to identify log-in credentials corresponding to the request and generate an authentication and decryption security information related to the authentication; and, the processor further operative to enable the authentication server to forward the authentication to a mobile communications device in communication with the wireless network and to forward the decryption security information in response to the request over the network; and either the processor operative to encrypt the credentials to generate the authentication, such that the authentication may be decrypted using the decryption security information; or, the processor operative to generate an identifier that identifies the credentials, and to generate encryption security information related to the decryption security information, to generate the authentication, whereby the encryption security information may be used by the mobile communications device to encrypt the credentials identified by the identifier, such that the encrypted identified credentials may be decrypted using the decryption security information.

In an embodiment, a server connected to a network and operative to host an on-line resource may be provided, the server comprising a processor operative to enable the server to: receive an on-line resource access request from a computing device through the network; process the request; forward the request to an authentication server; receive decryption security information from the authentication server; receive a processed authentication from the computing device; and, process the processed authentication using the decryption security information to authenticate the request.

In an embodiment, a computing device may be provided, the computing device comprising: a user input interface for receiving input from a user; a network communication subsystem for communicating with a network; a short-range communication subsystem for short-range communications with other computing devices; and, a processor in operative communication with the user input interface, the network communication subsystem and the short-range communication subsystem, the processor operative to enable the computing device to: receive a request to access an on-line resource available on the network through the user input interface; forward the request to an authentication server on the network; receive decryption security information through the network in response to the forwarded request and a processed authentication from a mobile communications device through the short-range communication subsystem; process the processed authentication using the decryption security information to obtain on-line resource log-in credentials; and, forward the on-line resource log-in credentials to the on-line resource to authenticate the user and gain access to the on-line resource.

In an embodiment, a method may be provided for authenticating a user requesting access, through a computing device connected to a network, to an on-line resource hosted on a server accessible via the network, the method comprising: the computing device receiving a request for on-line content from the user; the computing device forwarding the request to an authentication server connected to the network, the computing device receiving decryption security information over the network and receiving a processed authentication over a short-range communications subsystem; the computing device (500) processing the processed authentication using the decryption security information to obtain log-in credentials; and, the computing device forwarding the log-in credentials to the server over the network to authenticate the user.

In an aspect, the method may further comprise: the server receiving decryption security information from the authentication server; the server processing the processed authentication using the decryption security information to authenticate the user.

In an aspect, the method may further comprise: the authentication server receiving the request; the authentication server comparing the request with stored information to identify log-in credentials; the authentication server forwarding an authentication to a mobile device over a wireless network and decryption security information over the network in response to the request. The authentication server may forward the decryption security information to the computing device for decrypting encrypted log-in credentials identified by the request.

In an aspect, the method may further comprise: a mobile communications device receiving an authentication from the authentication server over a wireless network; the mobile device processing the authentication; the mobile device forwarding the processed authentication over a short-range communications subsystem of the mobile device to the computing device. The authentication processing may comprise executing instructions contained in the authentication before forwarding the processed authentication. The instructions may comprise an identifier and encryption security information and the executing may comprise the mobile device identifying credentials stored on the device and encrypting the identified credentials to create the processed authentication. The instructions may comprise a requirement to obtain a specified user input and the executing may comprise the mobile device notifying the user of a specified request for user input and forwarding the processed authentication to the computing device if the requested input is received.

The embodiments herein of computing devices are described as including a processor. It is understood, that such reference refers to at least one processor and comprises multi-core processors or multiple processors.

### BRIEF DESCRIPTION OF THE DRAWINGS

In drawings which illustrate by way of example only a preferred embodiment of the invention,

Figure 1 is a block diagram of an embodiment of a mobile communication device.

Figure 2 shows an exemplary block diagram of a communication subsystem component of an embodiment of a mobile communication device.

Figure 3 is a block diagram of an exemplary implementation of a node of a wireless network.

Figure 4 is a block diagram illustrating components of an exemplary configuration of a host system.

Figure 5 is a block diagram illustrating an embodiment of a system for authenticating a user.

Figure 6a is a process flow diagram illustrating operations of an embodiment of a computing device.

Figure 6b is a process flow diagram illustrating operations of an embodiment of a computing device.

Figure 7a is a process flow diagram illustrating operations of an embodiment of an authentication server.

Figure 8a is a process flow diagram illustrating operations of an embodiment of a wireless mobile device.

Figure 8b is a process flow diagram illustrating operations of an embodiment of a wireless mobile device.

Figure 8c is a process flow diagram illustrating operations of an embodiment of a wireless mobile device.

### DETAILED DESCRIPTION

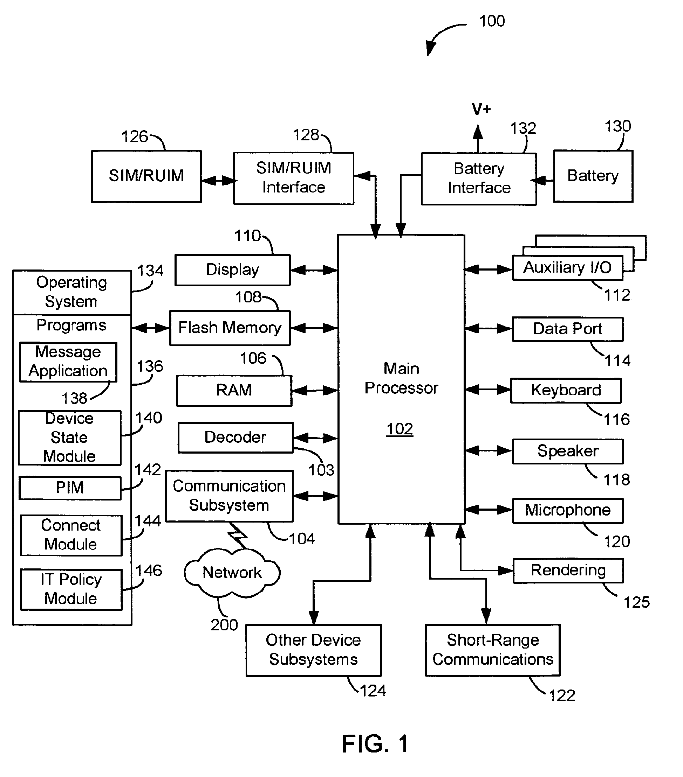

FIG. 1 is a block diagram of an exemplary embodiment of a mobile communication device 100. The mobile communication device 100 includes a number of components such as a main processor 102 that controls the overall operation of the mobile communication device 100. Communication functions, including data and voice communications, are performed through a communication subsystem 104. Data received by the mobile communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the mobile communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the mobile communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE and UMTS. Some other examples of data-centric networks include WiFi 802.11^{TM}, Mobitex^{TM} and DataTAC^{TM} network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range wireless communications 122 and other device subsystems 124.

Some of the subsystems of the mobile communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering circuit 125 may be implemented as hardware, software, or as a combination of both hardware and software.

The mobile communication device 100 can send and receive communication signals over the wireless network 200 after required network registration or activation procedures have been completed. Network access is associated with a subscriber or user of the mobile communication device 100. To identify a subscriber, the mobile communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the mobile communication device 100 and to personalize the mobile communication device 100, among other things. Without the SIM/RUIM card 126, the mobile communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The mobile communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile communication device 100. Although current technology makes use of a battery, future technologies such as micro fuel cells can provide the power to the mobile communication device 100.

The mobile communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the mobile communication device 100 during its manufacture. Other software applications include a message application 138 that can be any suitable software program that allows a user of the mobile communication device 100 to send and receive electronic messages. Various alternatives exist for the message application 138 as is well known to those skilled in the art. Messages that have been sent or received by the user are typically stored in the flash memory 108 of the mobile communication device 100 or some other suitable storage element in the mobile communication device 100. In at least some embodiments, some of the sent and received messages can be stored remotely from the device 100 such as in a data store of an associated host system that the mobile communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the mobile communication device 100 with respect to such items. This can be particularly advantageous when the host computer system is the mobile device subscriber's office computer system.

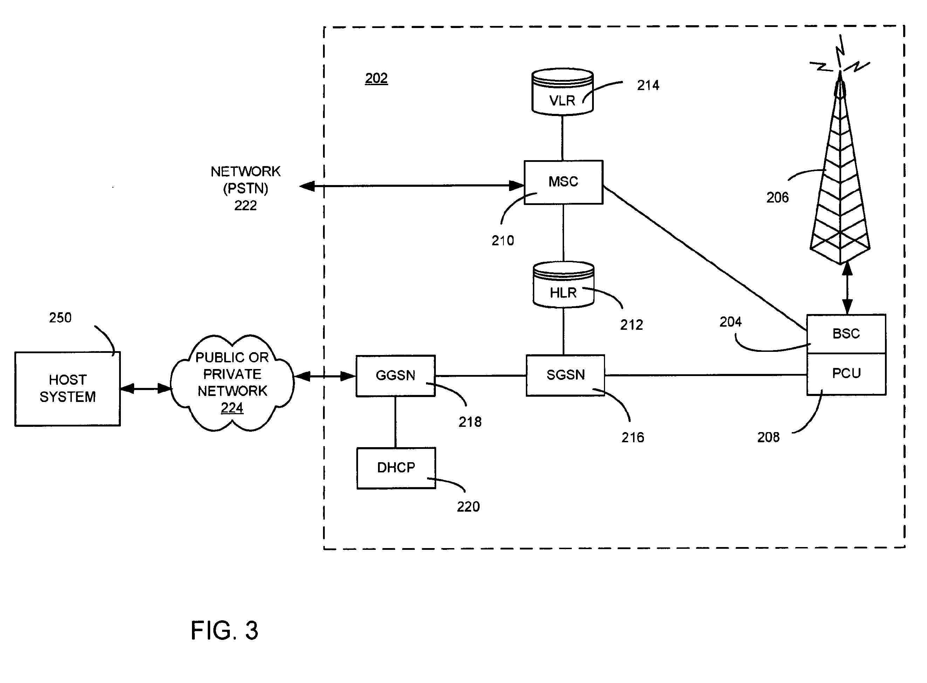

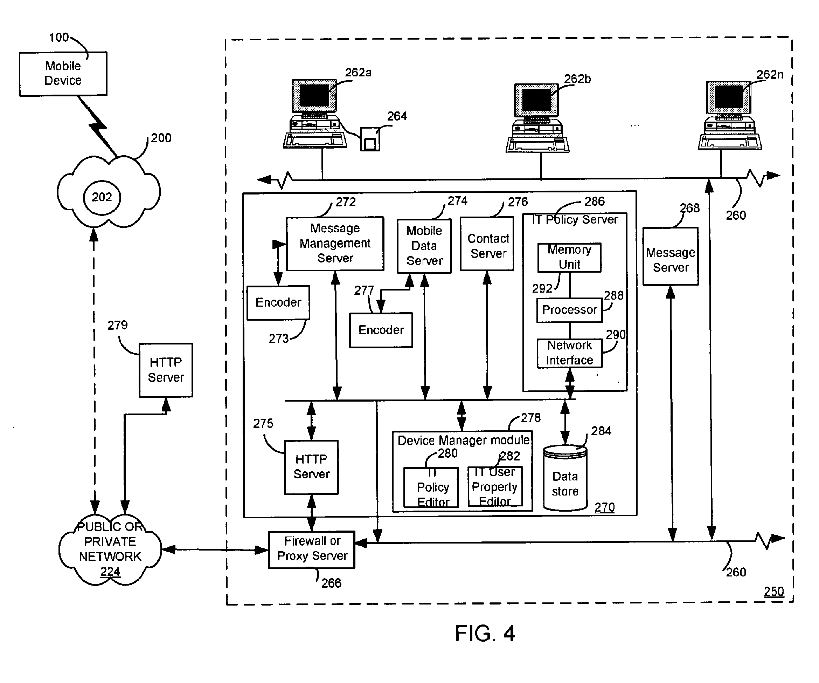

The mobile communication device 100 also includes a connect module 144, and an information technology (IT) policy module 146. The connect module 144 implements the communication protocols that are required for the mobile communication device 100 to communicate with the wireless infrastructure and any host system, such as an enterprise system, that the mobile communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the mobile communication device 100 to allow the mobile communication device 100 to use any number of services associated with the enterprise system. The connect module 144 allows the mobile communication device 100 to establish an end-to-end secure, authenticated communication pipe with the host system. A subset of applications for which access is provided by the connect module 144 can be used to pass IT policy commands from the host system to the mobile communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the mobile communication device 100. These software applications can be third party applications, which are added after the manufacture of the mobile communication device 100. Examples of third party applications include games, calculators, utilities, etc.

The additional applications can be loaded onto the mobile communication device 100 through at least one of the wireless network 200, the auxiliary I/O subsystem 112, the data port 114, the short-range wireless communications subsystem 122, or any other suitable device subsystem 124. This flexibility in application installation increases the functionality of the mobile communication device 100 and can provide enhanced on-device functions, communication-related functions, or both. For example, secure communication applications can enable electronic commerce functions and other such financial transactions to be performed using the mobile communication device 100.

The data port 114 enables a subscriber to set preferences through an external device or software application and extends the capabilities of the mobile communication device 100 by providing for information or software downloads to the mobile communication device 100 other than through a wireless communication network. The alternate download path can, for example, be used to load an encryption key onto the mobile communication device 100 through a direct and thus reliable and trusted connection to provide secure device communication. The data port 114 can be any suitable port that enables data communication between the mobile communication device 100 and another computing device. The data port 114 can be a serial or a parallel port. In some instances, the data port 114 can be a USB port that includes data lines for data transfer and a supply line that can provide a charging current to charge the battery 130 of the mobile communication device 100.

The short-range wireless communications subsystem 122 provides for communication between the mobile communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth^{TM}, and the 802.11^{TM} family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 is preferably an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the mobile communication device 100 is substantially similar, except that the received signals are output to the speaker 118, and signals for transmission are generated by the microphone 120. Alternative voice or audio I/O subsystems, such as a voice message recording subsystem, can also be implemented on the mobile communication device 100. Although voice or audio signal output is accomplished primarily through the speaker 118, the display 110 can also be used to provide additional information such as the identity of a calling party, duration of a voice call, or other voice call related information.

In an aspect, a computing device program product may be provided for execution on the computing device 100, the computing device program product rendering the computing device 100 operative to carry out steps of the method. In an embodiment, the computing device program product may comprise computer readable program code means embodied on a storage medium such as an optical disc, hard disc or other non-transitory memory.

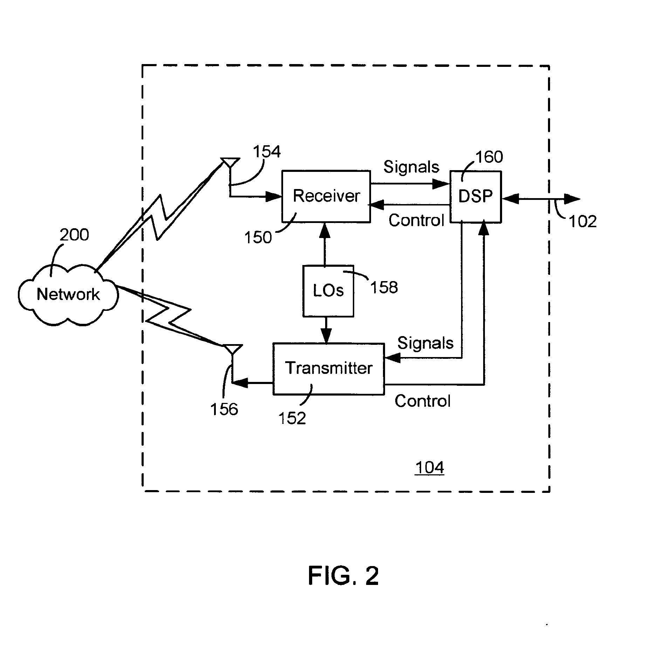

FIG. 2 shows an exemplary block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the mobile communication device 100 and the wireless network 200 can contain one or more different channels, typically different RF channels, and associated protocols used between the mobile communication device 100 and the wireless network 200. An RF channel is a limited resource that should be conserved, typically due to limits in overall bandwidth and limited battery power of the mobile communication device 100. When the mobile communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

FIG. 3 is a block diagram of an exemplary implementation of a node 202 of the wireless network 200. In practice, the wireless network 200 comprises one or more nodes 202. In conjunction with the connect module 144, the mobile communication device 100 can communicate with the node 202 within the wireless network 200. In the exemplary implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the mobile communication device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the mobile communication device 100 in accordance with particular, usually predetermined, communication protocols and parameters, under control of its controller. The fixed transceiver equipment similarly demodulates and possibly decodes and decrypts, if necessary, any communication signals received from the mobile communication device 100 within its cell. Communication protocols and parameters can vary between different nodes. For example, one node can employ a different modulation scheme and operate at different frequencies than other nodes.

For all communication devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile communication device 100. The SGSN 216 also performs security functions and access control for data traffic on the wireless network 200. The GGSN 218 provides internetworking connections with external packet switched networks and connects to one or more SGSNs 216 via an Internet Protocol (IP) backbone network operated within the network 200. During normal operations, a given mobile communication device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile communication device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile communication device 100 must be assigned to one or more APNs and communication devices 100 cannot exchange data without first performing a GPRS Attach to an APN that it has been authorized to use. The APN can be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (Ipsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile communication device 100 is not using its PDP Context, the PDP Context can be de-allocated and the IP address returned to the IP address pool managed by the DHCP server 220.

FIG. 4 is a block diagram illustrating components of an exemplary configuration of a host system 250 with which the mobile communication device 100 can communicate in conjunction with the connect module 144. The host system 250 will typically be a corporate enterprise or other local area network (LAN), but can also be a home office computer or some other private system, for example, in variant implementations. In the example shown in FIG. 4, the host system 250 is depicted as a LAN of an organization to which a user of the mobile communication device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's mobile communication device 100 is situated on a LAN connection. The cradle 264 for the mobile communication device 100 can be coupled to the computer 262a by a serial or a Universal Serial Bus (USB) connection, for example. Other user computers 262b-262n are also situated on the network 260, and each can be equipped with an accompanying cradle 264. The cradle 264 facilitates the loading of information (e.g. PIM data, private symmetric encryption keys to facilitate secure communications) from the user computer 262a to the mobile communication device 100, and can be particularly useful for bulk information updates often performed in initializing the mobile communication device 100 for use. The information downloaded to the mobile communication device 100 can include certificates used in the exchange of messages.

It will be understood by persons skilled in the art that the user computers 262a-262n are typically also connected to other peripheral devices, such as printers, etc., which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this exemplary configuration. More generally, the host system 250 can represent a smaller part of a larger network (not shown) of the organization, and can comprise different components and/or be arranged in different topologies than that shown in the exemplary embodiment of FIG. 4.

To facilitate the operation of the mobile communication device 100 and the wireless communication of messages and message-related data between the mobile communication device 100 and components of the host system 250, a number of wireless communication support components 270 can be provided. In some implementations, the wireless communication support components 270 can include a message management server 272, a mobile data server 274, a web server, such as Hypertext Transfer Protocol (HTTP) server 275, a contact server 276, and a device manager module 278. HTTP servers can also be located outside the enterprise system, as indicated by the HTTP server 279 attached to the network 224. The device manager module 278 includes an IT Policy editor 280 and an IT user property editor 282, as well as other software components for allowing an IT administrator to configure the communication devices 100. In an alternative embodiment, there can be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the communication devices 100. The memory unit 292 can store functions used in implementing the IT policy as well as related data. Those skilled in the art know how to implement these various components. Other components can also be included as is well known to those skilled in the art. Further, in some implementations, the data store 284 can be part of any one of the servers.

In this exemplary embodiment, the mobile communication device 100 communicates with the host system 250 through node 202 of the wireless network 200 and a shared network infrastructure 224 such as a service provider network or the public Internet. Access to the host system 250 can be provided through one or more routers (not shown), and computing devices of the host system 250 can operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the mobile communication device 100. The wireless VPN router allows a VPN connection to be established directly through a specific wireless network to the mobile communication device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile communication device 100 in this alternative implementation.

Messages intended for a user of the mobile communication device 100 are initially received by a message server 268 of the host system 250. Such messages can originate from any number of sources. For instance, a message can have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange^{TM} server, a Lotus Domino^{TM} server, a Novell Groupwise^{TM} server, or another suitable mail server installed in a corporate environment. In some implementations, the host system 250 can comprise multiple message servers 268. The message server 268 can also be adapted to provide additional functions beyond message management, including the management of data associated with calendars and task lists, for example.

When messages are received by the message server 268, they are typically stored in a data store associated with the message server 268. In at least some embodiments, the data store can be a separate hardware unit, such as data store 284, with which the message server 268 communicates. Messages can be subsequently retrieved and delivered to users by accessing the message server 268. For instance, an e-mail client application operating on a user's computer 262a can request the e-mail messages associated with that user's account stored on the data store associated with the message server 268. These messages are then retrieved from the data store and stored locally on the computer 262a. The data store associated with the message server 268 can store copies of each message that is locally stored on the mobile communication device 100. Alternatively, the data store associated with the message server 268 can store all of the messages for the user of the mobile communication device 100 and only a smaller number of messages can be stored on the mobile communication device 100 to conserve memory. For instance, the most recent messages (i.e. those received in the past two to three months for example) can be stored on the mobile communication device 100.

When operating the mobile communication device 100, the user may wish to have e-mail messages retrieved for delivery to the mobile communication device 100. The message application 138 operating on the mobile communication device 100 can also request messages associated with the user's account from the message server 268. The message application 138 can be configured (either by the user or by an administrator, possibly in accordance with an organization's IT policy) to make this request at the direction of the user, at some pre-defined time interval, or upon the occurrence of some pre-defined event. In some implementations, the mobile communication device 100 is assigned its own e-mail address, and messages addressed specifically to the mobile communication device 100 are automatically redirected to the mobile communication device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the mobile communication device 100. The message management server 272 also facilitates the handling of messages composed on the mobile communication device 100, which are sent to the message server 268 for subsequent delivery.

For example, the message management server 272 can monitor the user's "mailbox" (e.g. the message store associated with the user's account on the message server 268) for new e-mail messages, and apply user-definable filters to new messages to determine if and how the messages are relayed to the user's mobile communication device 100. The message management server 272 can also, through an encoder (not shown) associated therewith, compress message data, using any suitable compression/decompression technology (e.g. YK compression, JPEG, MPEG-x, H.26x, and other known techniques) and encrypt messages (e.g. using an encryption technique such as Data Encryption Standard (DES), Triple DES, or Advanced Encryption Standard (AES)), and push them to the mobile communication device 100 via the shared network infrastructure 224 and the wireless network 200. The message management server 272 can also receive messages composed on the mobile communication device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the mobile communication device 100 can be defined (e.g. by an administrator in accordance with IT policy) and enforced by the message management server 272. These may include whether the mobile communication device 100 can receive encrypted and/or signed messages, minimum encryption key sizes, whether outgoing messages must be encrypted and/or signed, and whether copies of all secure messages sent from the mobile communication device 100 are to be sent to a pre-defined copy address, for example.

The message management server 272 can also be adapted to provide other control functions, such as only pushing certain message information or pre-defined portions (e.g. "blocks") of a message stored on the message server 268 to the mobile communication device 100. For example, in some cases, when a message is initially retrieved by the mobile communication device 100 from the message server 268, the message management server 272 can push only the first part of a message to the mobile communication device 100, with the part being of a pre-defined size (e.g. 2 KB). The user can then request that more of the message be delivered in similar-sized blocks by the message management server 272 to the mobile communication device 100, possibly up to a maximum pre-defined message size. Accordingly, the message management server 272 facilitates better control over the type of data and the amount of data that is communicated to the mobile communication device 100, and can help to minimize potential waste of bandwidth or other resources.

The mobile data server 274 encompasses any other server that stores information that is relevant to the corporation. The mobile data server 274 can include, but is not limited to, databases, online data document repositories, customer relationship management (CRM) systems, or enterprise resource planning (ERP) applications. The mobile data server 274 can also connect to the Internet or other public network, through HTTP server 275 or other suitable web server such as an File Transfer Protocol (FTP) server, to retrieve HTTP webpages and other data. Requests for webpages are typically routed through mobile data server 274 and then to HTTP server 275, through suitable firewalls and other protective mechanisms. The web server then retrieves the webpage over the Internet, and returns it to mobile data server 274. As described above in relation to message management server 272, mobile data server 274 is typically provided, or associated, with an encoder 277 that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the mobile communication device 100 via the shared network infrastructure 224 and the wireless network 200. While encoder 277 is only shown for mobile data server 274, it will be appreciated that each of message server 268, message management server 272, and HTTP servers 275 and 279 can also have an encoder associated therewith.

The contact server 276 can provide information for a list of contacts for the user in a similar fashion as the address book on the mobile communication device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the HTTP server 275, the contact server 276, the device manager module 278, the data store 284 and the IT policy server 286 do not need to be implemented on separate physical servers within the host system 250. For example, some or all of the functions associated with the message management server 272 can be integrated with the message server 268, or some other server in the host system 250. Alternatively, the host system 250 can comprise multiple message management servers 272, particularly in variant implementations where a large number of mobile devices need to be supported.

The device manager module 278 provides an IT administrator with a graphical user interface with which the IT administrator interacts to configure various settings for the communication devices 100. As mentioned, the IT administrator can use IT policy rules to define behaviors of certain applications on the mobile communication device 100 that are permitted such as phone, web browser or Instant Messenger use. The IT policy rules can also be used to set specific values for configuration settings that an organization requires on the communication devices 100 such as auto signature text, WLAN/VoIP/VPN configuration, security requirements (e.g. encryption algorithms, password rules, etc.), specifying themes or applications that are allowed to run on the mobile communication device 100, and the like.

Rendering data files originally optimized or prepared for visualization on largescreen displays on a portable electronic device display often requires additional processing prior to visualization on the small-screen portable electronic device displays. According to an embodiment, this additional processing is accomplished by the rendering engine 125 shown in FIG. 1. As will be appreciated by those of skill in the art, the rendering engine can be implemented in hardware, software, or a combination thereof, and can comprise a dedicated image processor and associated circuitry, or can be implemented within main processor 102.

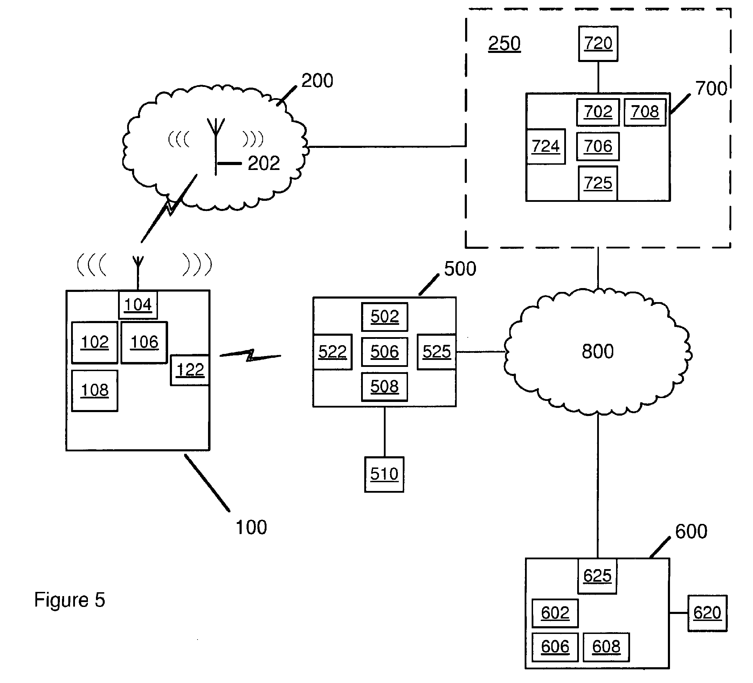

Referring to Figure 5, there is an exemplary embodiment comprising a computing device 500 connected to a public or private network such as the Internet 800. Computing device 500 could be a computer which a user is utilising to navigate the Internet 800 to access an on-line resource, for instance through a web browser. In a typical embodiment, processor 502 will communicate with RAM 506 and non-transitory storage memory 508 to execute a software program product, such as a web browser, to enable computing device 500 to communicate with the Internet 800 and access a server hosting the on-line resource, such as web server 600 connected to the Internet 800 through a network communication subsystem 625.

Computing device 500 further comprises a user input interface 510 such as a keyboard, mouse or touch screen for receiving input from a user, a network communication subsystem 525 for communications between the communication device 500 and the Internet 800, and a short-range communications subsystem 522 for short-range communications with other computing devices. In an embodiment, the short-range communications subsystem 522 may comprise a wireless short-range communications means such as Bluetooth^{TM} or Infrared. In an alternate embodiment, the short-range communications subsystem 522 may comprise a data port for physical connection to another computing device, for instance through a USB connection.

The web server 600 may receive an on-line resource request for content from the computing device 500 and, enabled by program code executing on the web server processor 602 in communication with web server RAM 606 and web server storage memory 608, will access content stored in web server storage memory 608, or a connected memory archive 620, and deliver the content to the computing device 500.

In applications where the content is an authentication portal for authenticating the user before delivering content intended for the user, or re-directing the user to another online resource, the first content delivered to the computing device 500 may comprise a user authentication portal. A user authentication portal may be presented as a web page that receives on-line resource log-in credentials comprising a credential input field for the user to enter an on-line resource user credential and a password input field for the user to enter an associated on-line resource user password that is associated with the user's credential. As is known, a user authentication portal may present some other input means, capable of receiving the on-line resource user credential and the associated on-line resource user password from the user. Typically a user will enter the on-line resource user credential and the associated on-line resource user password by inputing data through the user input interface 510, for instance a keyboard or touchscreen associated with the computing device 500.

According to an embodiment, an on-line authentication method may be employed wherein the computing device 500 utilises the mobile communications device 100 to assist in obtaining the user's on-line resource log-in credentials associated with a particular online resource. In an embodiment, the web browser operating on the computing device 500 includes program code to render the web browser operative to utilise the mobile communications device 100 for authentication. In both embodiments, authentication credentials consisting of an authentication user credential and an associated authentication user password are transmitted by the computing device 500, optionally along with an online resource identifier associated with the on-line resource being accessed, to an authentication server 700.

As will be appreciated, the program code could either comprise a component of the web browser, including a plug-in or extension, or the program code may comprise a separate program that receives content and requests from the web browser. For the embodiment where the web browser is so enabled, the web browser will accept authentication credentials comprising an authentication user credential and an associated authentication user password from the user.

The computing device 500 transmits the authentication credentials, comprising the authentication user credential and the associated authentication user password and optionally an on-line resource identifier, via the network communication subsystem 525 over the Internet 800 to an authentication server 700 through the authentication server communication subsystem 725. The authentication server 700 is enabled by program code executing on at least one authentication server processor 702 in communication with authentication server RAM 706 and authentication server storage memory 708. Alternatively, the authentication server 700 may comprise a server within the host system 250, or a server external to the host system 250 such as a service provider's server supplied and maintained by a service provider such as a device manufacturer, or a telecommunications company that is providing access to the wireless network 200.

For the purposes of this description, the authentication server 700 will be described as being within the host system 250, and in communication with the wireless network 200 and the Internet 800 through the network communication subsystem 725. In an embodiment, network communication subsystem 725 may provide communication with the Internet 800 and a wireless communication subsystem 724 may provide for communication with the nodes 202 of the wireless network 200, for instance over a private network. Alternatively, other subsystems within the host system 250, such as proxy server 266, may direct communications.

In an embodiment, the computing device 500 transmits the on-line resource identifier to the authentication server 700 based upon an on-line resource address input or selected by the user. In an alternate embodiment, the computing device 500 may transmit the on-line resource identifier to the authentication server 700 based upon the content received from the web server 600. In an alternate embodiment, the computing device 500 may transmit the on-line resource identifier to the authentication server 700 in response to additional user input. The additional user input may comprise an input selection made by the user instructing the device 500 to transmit the on-line resource identifier to the authentication server 700. Alternatively, the additional user input may comprise the authentication credentials entered by the user into the credential input field. The authentication credentials may comprise a credential identifier associated with the authentication server 700 that may be identified by the computing device 500 as being authentication credentials for forwarding to the authentication server 700. In an embodiment, the credential identifier may comprise a pre-defined alphanumeric prefix that may be appended to a random string to comprise the authentication user credential or associated password. The computing device 500 may identify a credential input by a user as being an authentication user credential by matching the specified characters of the input credential with the prefix.

The computing device 500 may transmit the associated authentication user password based upon input from the user, or based upon a stored authentication password associated with the on-line resource and authentication user credential. Preferably, the stored authentication password is maintained in a secure storage on the computing device 500, for instance in encrypted form. While storing passwords in association with an authentication user credential may lead to security weaknesses, the present system and method provides additional safe guards to protect a user.

The computing device 500 may also transmit a computing device identifier or a user identifier to the authentication server 700. Preferably the transmission to the authentication server 700 is encrypted.

The authentication server 700 receives the authentication log-in credentials comprising the authentication user credential, the associated authentication user password and optionally the on-line resource identifier, the computing device identifier or the user identifier, preferably in encrypted form. After decryption, the authentication server 700 compares the received information with information maintained in a user store, such as store 720, accessible to the authentication server 700. The authentication server 700 compares the authentication user credential, the associated authentication user password and the on-line resource identifier to locate the on-line resource user credential and the online resource user password stored for the user in association with the identified on-line resource. If a valid match is made as a result of the comparison, the authentication server 700 transmits a decryption certificate, preferably securely, to the computing device 500 for use in association with the on-line resource.

The authentication server 700 also, in one embodiment, transmits, preferably in encrypted form, an authentication comprising on-line resource log-in credentials comprising the on-line resource user credential and the on-line resource user password stored for the user identified by the authentication credentials in association with the identified on-line resource over the wireless network 200 to the mobile computing device 100. The authentication server 700 may also transmit instructions to the mobile computing device 100 associated with the log-in credentials.

The mobile computing device 100 receives and processes the authentication comprising the, preferably encrypted, on-line resource log-in credentials, and optionally the associated instructions. In a preferred embodiment, the instructions include an instruction to authenticate the mobile computing device 100 with the computing device 500 employing short-range communication module 122. The authentication may comprise a standard authentication mechanism known to the person skilled in the art. The short-range communication module 122 is used for the authentication to ensure the computing device 500 is within near proximity to the mobile computing device 100. After authentication, the mobile computing device 100 may transmit, using short-range communication module 122 the encrypted log-in credentials to the authenticated computing device 500.

In an embodiment, the mobile computing device 100 may maintain on-line resource log-in credentials within a secure store on the device 100. In this alternate embodiment, the authentication server 700 may transmit as an authentication, preferably in encrypted form, the on-line resource identifier and encryption security information to the mobile communications device 100. The encryption security information being associated with the decryption security information sent from the authentication server 700 in response to the request. Information encrypted using the encryption security information may be decrypted using the decryption security information. In an embodiment, the on-line resource identifier may comprise a hash of the log-in credentials maintained within the secure store of the device 100.

The mobile communications device 100 may then access the log-in credentials associated with the on-line resource identifier from the secure store, and process the corresponding credentials using the encryption security information supplied by the authentication server 700 to generate a processed authentication comprising encrypted online resource log-in credentials. The mobile communications device 100 may then authenticate with the computing device 500 as described above, and transmit the processed authentication, including the encrypted log-in credentials, to the computing device 500.

In an embodiment where the device 100 maintains the log-in credentials in encrypted form, the processing may comprise decrypting the log-in credentials from a first encrypted form and encrypting the decrypted log-in credentials using the encryption security information into a second encrypted form to comprise the processed authentication.

In both embodiments, the authenticated computing device 500 may process the processed authentication received from the mobile communications device 100 to decrypt the encrypted log-in credentials, using the decryption security information sent to the computing device 500 from the authentication server 700, and submit the log-in credentials to the on-line resource in place of the user credential and the associated user password actually entered by the user into the computing device 500.

In such a fashion, a user entering log-in credentials through user input 510 may enter information unrelated to the log-in credentials required by an on-line resource. For instance, a user may enter a single set of log-in credentials for multiple on-line resources, but the computing device 500 will actually authenticate the user with each on-line resource using a unique set of log-in credentials.

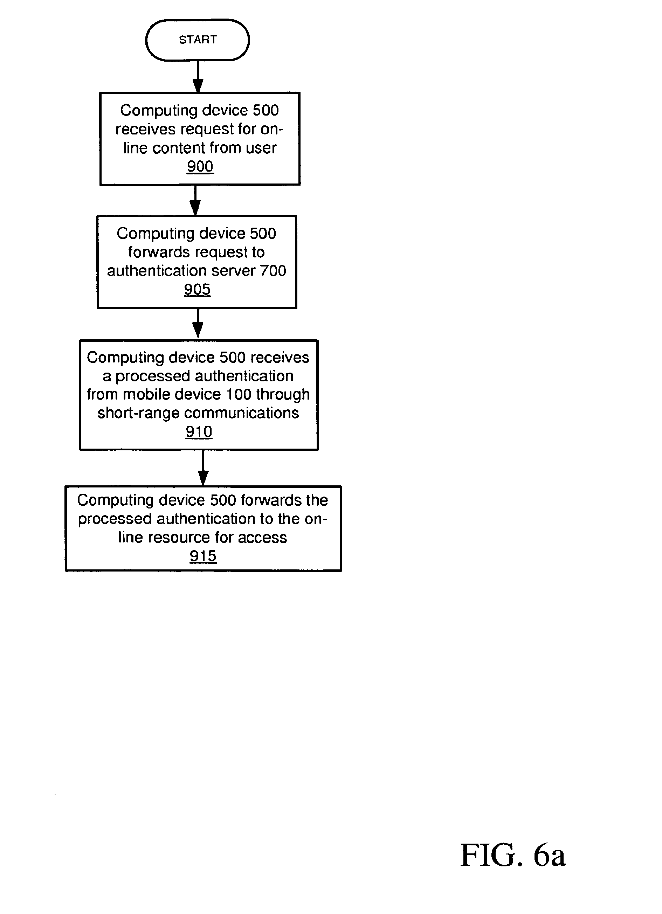

Referring to Figure 6a, computing device 500 may be operative to receive a request for on-line content from a user in step 900. As indicated above, the user request may comprise the user navigating to an on-line resource available on web server 600 and the web server 600 delivering an authentication portal to the computing device 500. In an embodiment, the request may further comprise the user entering authentication credentials into an authentication portal displayed by the computing device 500. In response to the request, the computing device 500 may forward the request to the authentication server 700 in step 905. As indicated above, the computing device 500 may forward authentication log-in credentials to the authentication server to identify the user. The computing device 500 may receive a processed authentication from a mobile device 100 over short-range communications in step 910. The computing device 500 may forward the processed authentication to the on-line resource for access in step 915.

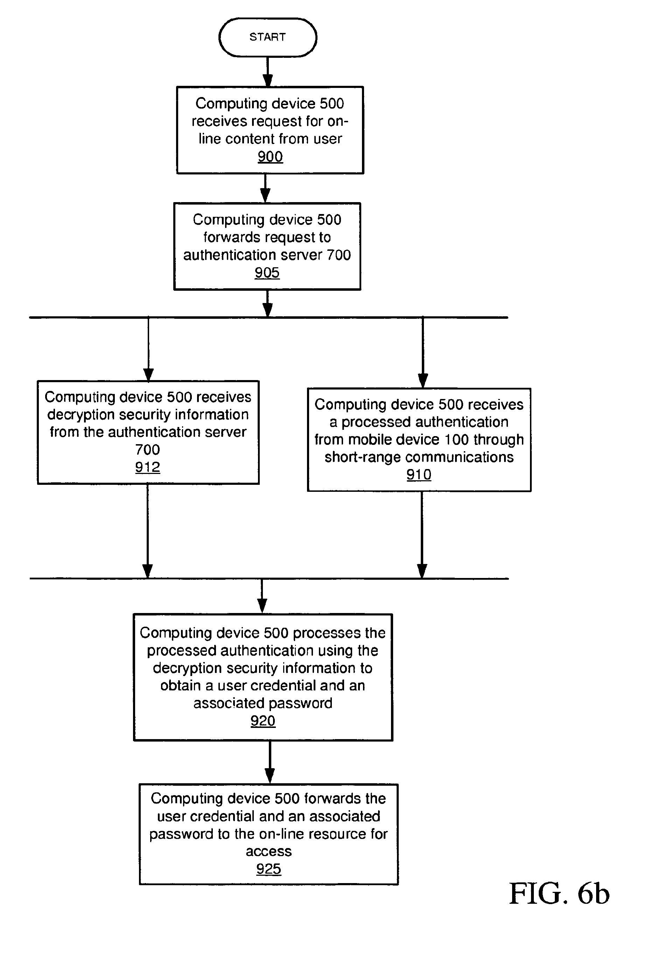

In an alternate embodiment illustrated in Figure 6b, the computing device may carry out steps 900 and 905 as described above. After forwarding the request to the authentication server 700, however, the computing device 500 may receive both a processed authentication through short range communications in step 910 and decryption security information from the authentication server 700 over the network in step 912. The computing device 500 may use the decryption security information to process the processed authentication to obtain a user credential and an associated password for the online resource in step 920. In an aspect, the computing device 500 may process the processed authentication by decrypting the processed authentication using the decryption security information. The computing device 500 may then forward the user credential and the associated password to the on-line resource for access in step 925.

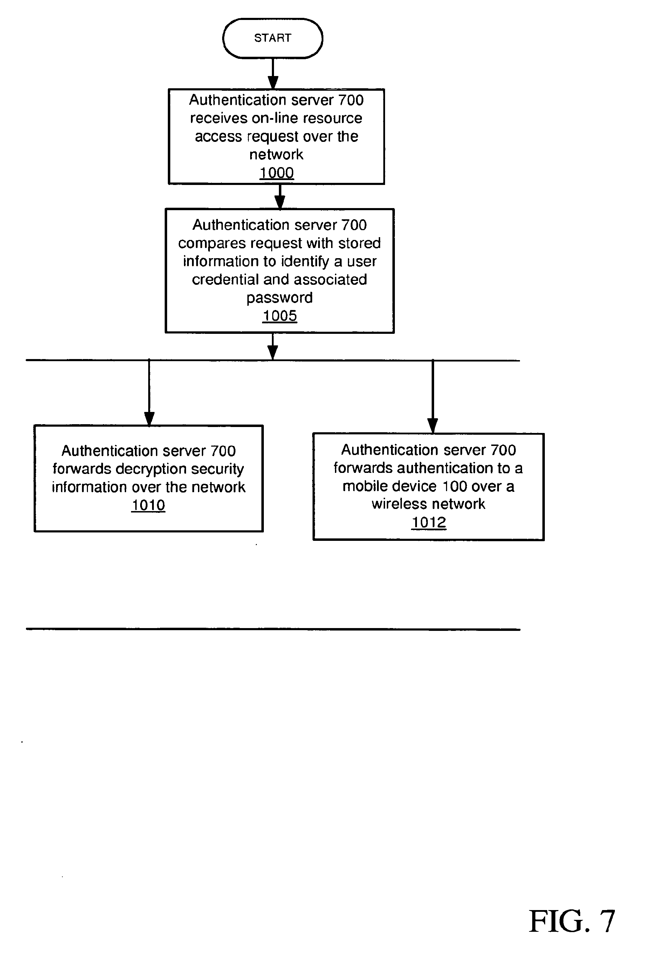

Referring to Figure 7, the authentication server 700 may be operative to receive an on-line resource access request over the network in step 1000. The authentication server 700 may compare the request to stored information to identify a user credential and associated password in step 1005. The authentication server 700 may forward decryption security information over the network in step 1010 and forward an authentication to a mobile device over a wireless network in step 1012.

In an embodiment, the authentication server 700 may forward the decryption security information to the requesting device, for instance computing device 500. In an alternate embodiment, the authentication server 700 may forward the decryption security information to the on-line resource identified in the request, such as web server 600.

As described above, the authentication forwarded in step 1012 may comprise encrypted log-in credentials for the on-line resource, or may comprise an identifier such as a hash to identify log-in credentials stored on a secure store of the mobile device 100.

In an embodiment, after step 1005, but before steps 1010 and 1012, the authentication server 700 may further generate an encryption key and a decryption key, the decryption key comprising the decryption security information forwarded over the network in step 1010. The encryption key may comprise encryption security information included with the authentication forwarded in step 1012 where log-in credentials are stored on the mobile device 100. Alternatively, the encryption key may be used by the authentication server 700 to encrypt log-in credentials resident on the authentication server 700 such that the encrypted log-in credentials comprise the authentication.

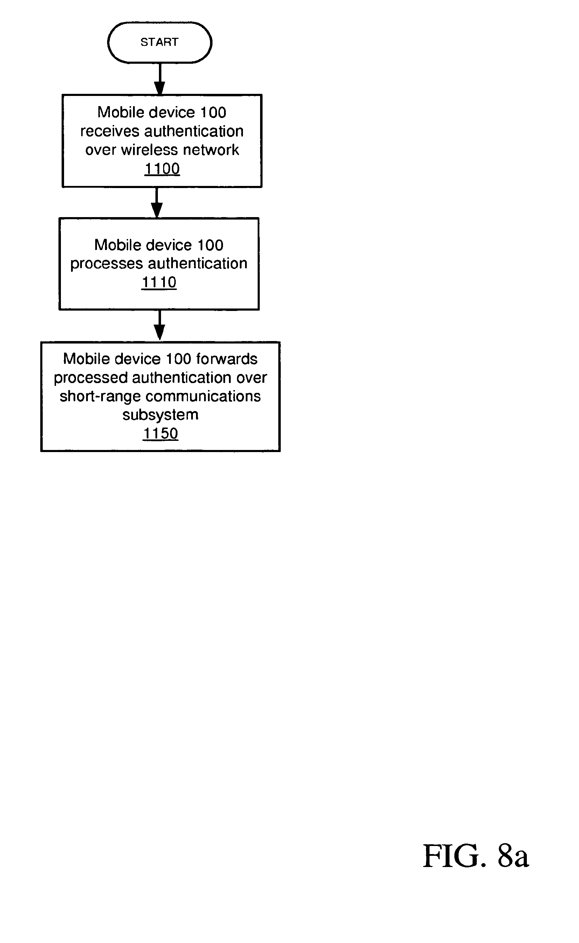

Referring to Figure 8a, the mobile device 100 may be operative to receive an authentication over a wireless network in step 1100. The device 100 may process the authentication in step 1110. The mobile device 100 may forward a processed authentication over a short-range communications system, such as Bluetooth^{TM}, to a computing device 500 in step 1150.

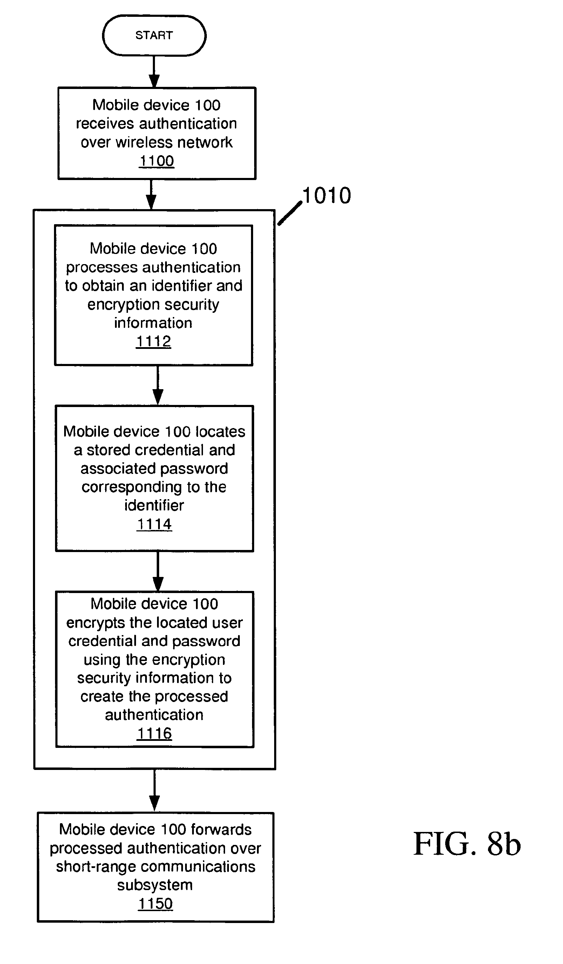

Referring to Figure 8b, in an embodiment, the mobile device 100 may store log-in credentials on a secure store of the mobile device 100 and the authentication may comprise an identifier to identify stored log-in credentials that correspond to the current on-line resource request. Accordingly, in the embodiment the authentication processing step 1010 may comprise the mobile device 100 obtaining stored log-in credentials. In the embodiment, the mobile device 100 may process the authentication to obtain the identifier and encryption security information in step 1112. The mobile device 100 may locate stored log-in credentials comprising a stored user credential and associated password that correspond to the identifier in step 1114. The mobile device 100 may encrypt the located log-credentials using the encryption security information to create the processed authentication in step 1116. As above, the mobile device 100 may forward the processed authentication, in this embodiment comprising the encrypted log-in credentials, over the short-range communications subsystem to computing device 500 in step 1150.

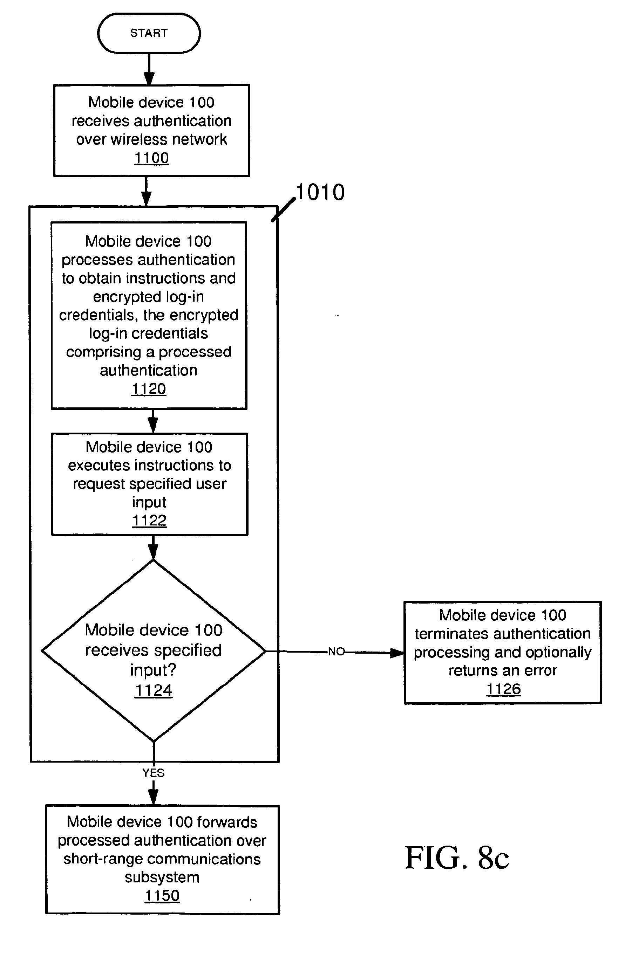

Referring to Figure 8c, in an embodiment, the authentication may comprise instructions for execution by the mobile device 100. Accordingly, in the embodiment, the authentication processing step 1120 may comprise the mobile device 100 processing the authentication to obtain the instructions and execute the instructions. In the embodiment illustrated, the mobile device 100 may process the authentication to obtain instructions and encrypted log-in credentials in step 1120. The encrypted log-in credentials comprising a processed authentication for subsequent forwarding to the computing device 500. Alternatively, the authentication may comprise instructions and an identifier for locating credentials stored on the mobile device 100 as illustrated in Figure 8b. The mobile device 100 may execute the instructions, for instance to request specified user input in step 1122. The mobile device 100 may determine whether it has received the specified input in a specified form in step 1124. The specified form may comprise temporal limitations or specific input requirements. If the mobile device determines that it has not received the specified input in step 1124, the mobile device 100 may terminate the authentication processing and optionally return an error in step 1126. The error may be returned to either the authentication server 700 over the wireless network or to the computing device 500 over the short-range communications subsystem, or both. If the mobile device 100 determines that it has received the specified input in step 1124, the mobile device 100 may forward the processed authentication, comprising encrypted log-in credentials, over the short-range communications subsystem to the computing device 500 in step 1150.

In an embodiment, the computing device 500 may be operative to automatically open multiple on-line resources in response to the user entering the single set of log-in credentials into an on-line resource from a set of trigger on-line resources as identified in a set of preferences recorded on the computing device 500 for the user.

In an alternate embodiment, the set of preferences may be recorded on the authentication server 700 or the device 100. In response to a master credential being input into the credential field of an on-line resource, the computing device 500 is operative to forward the master credential to the authentication server 700 as described above. Upon receiving the master credential, the authentication server 700 may be operative to identify preferences associated with the master credential and forward instructions to the device 100. The device 100 may receive the instructions from the authentication server 700 and contact the computing device 500 using the short range communications module 122 to spawn the on-line resources specified by the preferences stored on the authentication server 700. Where the preferences are stored on mobile device 100, the device 100 may be operative to identify preferences associated with instructions sent by the authentication server 700 and access log-in credentials stored on the device 100 to forward to the computing device 500. The device 100 may forward at least one set of log-in credentials to the computing device 500 to allow the user to access the spawned on-line resources. In an embodiment, each on-line resource is accessed using a unique set of log-in credentials.

Furthermore, the system may also monitor the user credential and associated user password to ensure that they meet a specified security policy. An exemplar security policy would be a unique user credential and associated user password combination for each online resource. An alternate exemplar security policy would be to require a minimum number of characters for each of the user credential and associated user password. In an embodiment a specific variation of characters may be required including capital letters, numbers and symbols, for instance. In an embodiment, the authentication server 700 may assign a random user credential and a random associated user password, each meeting a specified 'strength' of number of letters and type of characters, to each on-line resource.

Log-in credentials for an on-line resource may be entered through a variety of operations. In an embodiment, the computing device 500 may include the operability for a user to set a user credential and associated password for an on-line resource such as web server 600. In the embodiment, the computing device 500 may be operative to present a user with an option to register with an on-line resource. In response to the user selecting the option to register with the on-line resource, the computing device 500 may forward the on-line resource identifier to the authentication server 700 to carry out registration with the on-line resource on behalf of the user. In an aspect, the computing device may collect on-line resource specific authentication log-in credentials from the user.

In an alternate embodiment, the on-line resource may be operative to register the user with the authentication server 700 directly. In the embodiment, a user would navigate to an on-line resource using the computing device 500 and select registration for that resource. In response, the on-line resource would send a registration portal to the computing device 500. The user may enter a user credential, associated password and an authentication server identifier into the registration portal. In an embodiment, the authentication server identifier may comprise a phone number or PIN associated with the mobile device 100. The on-line resource collects the entered information, identifies an associated authentication server from the authentication server identifier and forwards a registration request to the authentication server 700.

In an embodiment, the authentication server 700 may forward a registration notification to a mobile communications device 100 associated with the user requesting registration. The registration notification may require further user input into the mobile device 100. Upon receiving the input, the mobile device 100 may forward a confirmation to the authentication server 700 to proceed with registration.

In a further embodiment, the authentication server 700 may present a registration portal for registering with one or more on-line resources that are operative to interact with the authentication server 700. A user may connect to the registration portal using computing device 500, for instance by navigating to the registration portal using an Internet browser, and register for the on-line resources. The registration process may include the user providing additional personal information or on-line resource specific information. For instance, in registering with a financial institution on-line, the user may supply a financial institution account number, password or PIN to identify the user as a customer of the financial institution. The authentication server 700, in response to the user registering for the on-line resources, may contact the on-line resources to register log-in credentials for the user. Depending upon the requirements of the on-line resource, the authentication server 700 may further supply the personal information provided by the user for that on-line resource.

The authentication server 700 may monitor the status of the credentials and, either require a user to generate a new set of credentials after a prescribed period of time, or automatically generate and authenticate a new set of credentials with the on-line resource without further user intervention. In an embodiment, the authentication server 700 may refresh the log-in credentials based upon a security level of the device 500.

In this way, the authentication server 700 may ensure that a user's on-line credentials meet a minimum strength and variability requirement and update those credentials as specified. Since the user is only required to remember the credentials that will be transmitted to the authentication server 700, there is less risk that a user will write down or record their credentials in an unsecure location. Furthermore, even if a user did write down their credentials in an unsecure location, a third party would need access to the mobile communications device 100 in order to access the on-line resource.

As indicated above, storing the password to be sent to the authentication server 700 on computing device 500 is less of a security risk than storing passwords to the online resource as an attacker would still need access to the mobile computing device 100 to receive the log-in credentials for a particular website.

Having described a general embodiment, more specific exemplar embodiments will be described in more detail below.

Mobile computing device 100 may be used to account for latency in the communications by requiring user input to the device 100 within a pre-determined period of time after the device 100 gives the user an indication such as a tone or vibration. In an embodiment, the device 100 may require a level of user input depending upon instructions sent by the authentication server 700. Preferably the level of user input matches a security level of the on-line resource being accessed. Typical user inputs would include a physical input from the user, such as a key stroke, within a pre-set period of time,

In an embodiment the computing device 100 may notify a user through vibratory, tone or visual means that it is ready to receive an input. In a preferred arrangement, the notification may vary with the level of user input required by the mobile computing device 100. In an embodiment, the authentication server 700 will instruct the mobile computing device 100 to obtain a pre-determined input from the user, such as a mobile device credential, before authenticating the computing device 500. The authentication server may instruct the mobile device 100 by including instructions with the authentication sent by the authentication server 700 to the mobile device 100 over the wireless network.

In this way, an on-line resource may be further secured by requiring two types of information from a user. On-line resource credentials, typically entered through user input interface 510 of a computing device accessing a network such as the Internet 800 and a mobile device credential which is manually entered into the device 100 by the user. In this way, a security policy of the authentication server 700 may be imposed on the log-in credentials used to access an on-line resource, such as a unique credential and password for each on-line resource, but a user is only required to remember two sets of credentials, the mobile device credential and the authentication credentials. Furthermore, the mobile device credential is resident on and tested by the mobile device 100, reducing the risk of an attacker breaking the security.

In an embodiment of the authentication server 700, a user may be able to trigger a regeneration of on-line resource credentials by accessing the authentication server 700 directly. In an embodiment, the user may access the authentication server 700 from computing device 500 through a web portal that authenticates the user. In a preferred embodiment the authentication server log-in credentials are different from the credentials entered by the user to access other on-line resources.

Preferably, authentication server 700 is operative to receive the trigger to regenerate on-line resource credentials, process the request to generate on-line resource credentials for one or more on-line resources and communicate directly with the on-line resource, such as web server 600, to update the user's credentials with the on-line resource. In this fashion a user may browse to a single location, the authentication server 700, to refresh their on-line credentials.

In an exemplary situation, a user may employ a temporary public computing device 500, such as a computer in a cyber café or other public location, to access various on-line resources. After concluding their computing session, the user can access the authentication server 700 to regenerate their on-line credentials to secure access to any websites they visited from the cyber café. In a first preferred arrangement, the user may access the authentication server 700 through an authentication portal accessible from the public computing device 500.

In an alternate preferred arrangement, mobile computing device 100 is operative to receive a request from the user to regenerate one or more of their on-line credentials and the mobile computing device 100 may process the request to forward a message to the authentication server 700 using the wireless network 200. The authentication server 700, receiving the message from the mobile computing device 100, may process the message to trigger the regeneration of one or more on-line resource credentials.

In situations where a user does not have their mobile computing device 100 with them when attempting to access an on-line resource, an alternate process may be provided. In an exemplary embodiment, authentication server 700 is operative to receive a log-in credential request from a user accessing the Internet 800 from computing device 500. In response to the log-in credential request, the authentication server 700 may, in a first embodiment transmit the log-in credentials to the user for display by the computing device 500. Preferably communications between computing device 500 and authentication server 700 are secured through encryption. The user may then read the credentials from the screen and enter them directly into the authentication portal of the on-line resource.

In a second exemplary embodiment, the computing device 500 may be enabled, for instance by a plug-in for a web browser executable on the computing device 500, to receive the credentials from the authentication server 700 and auto-populate the authentication portal with the credentials. As above, preferably the communications between the computing device 500 and the authentication server 700 are encrypted.

In an aspect, in response to a request for access without mobile device 100, the authentication server 700 may forward additional security questions to the computing device 500 for response by the user. In an aspect, in response to a request for access without mobile device 100, the authentication server 700 may refresh the user credentials and/or passwords of the on-line resource being accessed after the current session has completed.

In an aspect, in response to a request for access without mobile device 100, the authentication server 700 may forward a notification to the mobile device 100 to alert the user that a request for access without the mobile device 100 has been submitted. In an embodiment, the authentication server 700 may further be operative to receive a notification response from the device 100 within a specified time period. If the authentication server 700 receives the notification response from the device 100 within the specified time period, the authentication server 700 denies the request for access.

Where computing device 500 is a public computer, the authentication server 700 may, in an embodiment, prompt the user for a request to trigger the regeneration of the online resource log-in credentials after the on-line resource session has concluded. The authentication server 700 may also prompt the user for a request to trigger the regeneration of the authentication server log-in credentials.

In an embodiment, the regenerated authentication server log-in credentials are communicated to the user by transmitting the credentials from the authentication server 700 over the wireless network 200 to the computing device 100 for display to the user.

In the event that computing device 500 is unable to access the on-line resource available from web server 600 with the supplied log-in credentials, the computing device 500 may forward an error message to either mobile device 100 over the short-range communications or to the authentication server 700 over the Internet 800. In this fashion, the computing device 500 may provide feedback when a received log-in credential fails to access the on-line resource.

In an embodiment, the error message may include information about the rejected log-in credentials, such as a hash of the rejected log-in credentials. In the former case, the mobile device 100 may request an updated log-in credential from the authentication server 700 to replace the rejected log-in credential. In the latter case, the authentication server 700 may process the error message to compare the rejected log-in credential with its records to determine if the rejected log-in credential matches a current log-in credential for the on-line resource stored on the authentication server 700. The authentication server 700 may forward the current log-in credential to the computing device 500, optionally using mobile device 100, if the rejected log-in credential does not match the current log-in credential. If the current log-in credential matches the rejected log-in credential, the authentication server 700 may either refresh the log-in credentials with the on-line resource or return a message indicating that an error has occurred to the user, through computing device 500 or mobile device 100.

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A system to authenticate a user requesting access, through a computing device (500) connected to a network (800), to an on-line resource hosted by a server (600) connected to the network (800), the system comprising:
the computing device (500);
a mobile communication device (100) connected to a wireless network (200), the mobile communications device (100) further operative to communicate over a short-range communications link;
an authentication server (700) connected to the network (800) and in communication with the mobile communications device (100) over the wireless network (200);
wherein the authentication server (700) is operative to receive an on-line resource access request through the network (800), process the request and, if the request is verified, forward an authentication to the mobile communications device (100) using the wireless network (200) and return decryption security information related to the authentication over the network (800) in response to the request;
wherein the mobile communications device (100) is connected to the wireless network (200) and is operative to receive the authentication over the wireless network (200), process the authentication and forward the processed authentication to the computing device (500) over the short-range communications link;
the computing device (500) operative to receive the on-line resource access request from the user and to forward the request to the authentication server (700) and operative to communicate over the short-range communications link and to receive the processed authentication over the short-range communications link from the mobile communications device (100); and
wherein the computing device (500) is further operative to receive the decryption security information over the network (800) and to process the processed authentication using the decryption security information to obtain on-line resource log-in credentials and to forward the on-line resource log-in credentials to the server (600) over the network to access the on-line resource.

2. A mobile communications device (100) comprising
a communications subsystem adapted to communicate over a wireless network (200);
a short-range communications subsystem adapted to enable short-range communications;
a processor, in communication with the communications subsystem and the short-range communications subsystem;
a secure memory store in communication with the processor;
the processor operative to enable the device to:
receive an authentication through the communications subsystem, the authentication comprising information to identify on-line resource log-in credentials stored in the secure memory store and including instructions comprising encryption security information to be executed by the device;
process the authentication and execute the instructions to render the processor further operative to process the information to locate the identified credentials and secure the identified credentials using the encryption security information to create a processed authentication, and preferably wherein the processor is further operative to decrypt the identified credentials from a first encryption state when stored in the secure memory store and to encrypt the decrypted identified credentials using the encryption security information into a second encrypted state; and, to forward the processed authentication to a computing device (500) through the short-range communications subsystem.

3. The device of claim 2 further comprising:
a user input interface; and,
the processor operative to execute the instructions to request and require user input through the user input interface, before the device forwards the processed authentication;
and
preferably further comprising:
the processor operative to receive the user input through the user input interface, compare the user input with a pre-defined user input stored on the device and forward the processed authentication if the user input matches the pre-defined user input.

4. An authentication server (700) comprising:
a communication subsystem in communication with a network and a wireless network (200);
a data store;
a processor, in communication with the communication subsystem and the data store, the processor operative to enable the authentication server (700) to receive an on-line resource access request from a computing device (500) through the network, compare the request with information maintained within the data store to identify log-in credentials corresponding to the request and generate an authentication and decryption security information related to the authentication;
the processor further operative to enable the authentication server (700) to forward the authentication to a mobile communications device (100) in communication with the wireless network (200) and to forward the decryption security information in response to the request over the network; and,
either the processor operative to encrypt the credentials to generate the authentication, such that the authentication may be decrypted using the decryption security information; or,
the processor operative to generate an identifier that identifies the credentials, and to generate encryption security information related to the decryption security information, to generate the authentication, whereby the encryption security information may be used by the mobile communications device (100) to encrypt the credentials identified by the identifier, such that the encrypted identified credentials may be decrypted using the decryption security information.

5. A computing device (500) comprising:
a user input interface adapted to receive input from a user;
a network communication subsystem adapted to communicate with a network;
a short-range communication subsystem adapted to enable short-range communications with other computing devices (500); and,
a processor in operative communication with the user input interface, the network communication subsystem and the short-range communication subsystem, the processor operative to enable the computing device (500) to:
receive a request to access an on-line resource available on the network through the user input interface;
forward the request to an authentication server (700) on the network;
receive decryption security information through the network in response to the forwarded request and a processed authentication from a mobile communications device (100) through the short-range communication subsystem;
process the processed authentication using the decryption security information to obtain on-line resource log-in credentials; and,
forward the on-line resource log-in credentials to the on-line resource to authenticate the user and gain access to the on-line resource.

6. A method of authenticating a user requesting access, through a computing device (500) connected to a network, to an on-line resource hosted on a server (600) accessible via the network, the method comprising:
the computing device (500) receiving an on-line content request from the user;
the computing device (500) forwarding the request to an authentication server (700) connected to the network,
the computing device (500) receiving decryption security information over the network and receiving a processed authentication over a short-range communications subsystem;
the computing device (500) processing the processed authentication using the decryption security information to obtain log-in credentials; and,
the computing device (500) forwarding the log-in credentials to the server (600) over the network to authenticate the user.

7. The method of claim 6 further comprising:
the authentication server (700) receiving the request;
the authentication server (700) comparing the request with stored information to identify log-in credentials;
the authentication server (700) forwarding an authentication to a mobile communications device (100) over a wireless network (200) and decryption security information over the network to the computing device (500) for decrypting encrypted log-in credentials identified by the request.

8. The method of claim 6 further comprising:
a mobile communications device (100) receiving an authentication including instructions comprising an identifier and encryption security information from the authentication server (700) over a wireless network (200);
the mobile communications device (100) processing the authentication by executing the instructions to identify credentials stored on the device and encrypting the identified credentials to create the processed authentication;
the mobile communications device (100) forwarding the processed authentication over a short-range communications subsystem of the mobile communications device (100) to the computing device (500); and/or,
the instructions comprise a requirement to obtain a specified user input and the executing further comprise the mobile communications device (100) notifying the user of a specified request for user input and forwarding the processed authentication to the computing device (500) if the requested input is received.

## Patentansprüche

1. Ein System zum Authentifizieren eines Benutzers, der einen Zugriff über eine Computervorrichtung (500), die mit einem Netzwerk (800) verbunden ist, auf eine Online-Ressource anfordert, die von einem Server (600) gehostet wird, der mit dem Netzwerk (800) verbunden ist, wobei das System aufweist:
die Computervorrichtung (500);
eine mobile Kommunikationsvorrichtung (100), die mit einem drahtlosen Netzwerk (200) verbunden ist, wobei die mobile
Kommunikationsvorrichtung (100) weiter betriebsfähig ist zum Kommunizieren über eine Nahbereichs-Kommunikationsverbindung;
einen Authentifizierungsserver (700), der mit dem Netzwerk (800) verbunden ist und in Kommunikation mit der mobilen Kommunikationsvorrichtung (100) über das drahtlose Netzwerk (200) ist;
wobei der Authentifizierungsserver (700) betriebsfähig ist zum Empfangen einer Zugriffsanforderung auf eine Online-Ressource über das Netzwerk (800), Verarbeiten der Anforderung und, wenn die Anforderung verifiziert ist, Weiterleiten einer Authentifizierung an die mobile Kommunikationsvorrichtung (100) unter Verwendung des drahtlosen Netzwerks (200) und Zurücksenden von
Entschlüsselungssicherheitsinformation in Bezug auf die Authentifizierung über das Netzwerk (800) in Reaktion auf die Anforderung;
wobei die mobile Kommunikationsvorrichtung (100) mit dem drahtlosen Netzwerk (200) verbunden ist und betriebsfähig ist zum Empfangen der Authentifizierung über das drahtlose Netzwerk (200), Verarbeiten der Authentifizierung und Weiterleiten der verarbeiteten Authentifizierung an die Computervorrichtung (500) über die Nahbereichs-Kommunikationsverbindung;
wobei die Computervorrichtung (500) betriebsfähig ist zum Empfangen der Zugriffsanforderung auf eine Online-Ressource von dem Benutzer und
Weiterleiten der Anforderung an den Authentifizierungsserver (700) und
betriebsfähig ist zum Kommunizieren über die Nahbereichs-Kommunikationsverbindung und Empfangen der verarbeiteten Authentifizierung über die Nahbereichs-Kommunikationsverbindung von der mobilen Kommunikationsvorrichtung (100); und
wobei die Computervorrichtung (500) weiter betriebsfähig ist zum Empfangen der Entschlüsselungssicherheitsinformation über das Netzwerk (800) und zum Verarbeiten der verarbeiteten Authentifizierung unter Verwendung der Entschlüsselungssicherheitsinformation, um Online-Ressource-Anmeldungs-Berechtigungsnachweise zu erlangen, und
Weiterleiten der Online-Ressource-Anmeldungs-Berechtigungsnachweise an den Server (600) über das Netzwerk, um auf die Online-Ressource zuzugreifen.

2. Eine mobile Kommunikationsvorrichtung (100), die aufweist ein Kommunikationsteilsystem, das ausgebildet ist zum Kommunizieren über ein drahtloses Netzwerk (200);
ein Nahbereichs-Kommunikationsteilsystem, das ausgebildet zum Ermöglichen von Nahbereichs-Kommunikationen;
einen Prozessor, der in Kommunikation mit dem Kommunikationsteilsystem und dem Nahbereichs-Kommunikationsteilsystem ist;
einen sicheren Speicher in Kommunikation mit dem Prozessor; wobei der Prozessor betriebsfähig ist, um die Vorrichtung zu aktivieren zum:
Empfangen einer Authentifizierung durch das Kommunikationsteilsystem,
wobei die Authentifizierung Information aufweist zum Identifizieren von Online-Ressource-Anmeldungs-Berechtigungsnachweisen, die in dem sicheren Speicher gespeichert sind und Anweisungen umfassen, die Verschlüsselungssicherheitsinformation zur Ausführung durch die Vorrichtung aufweisen;
Verarbeiten der Authentifizierung und Ausführen der Anweisungen, damit der Prozessor weiter betriebsfähig ist zum Verarbeiten der Information,
um die identifizierten Berechtigungsnachweise zu lokalisieren und die identifizierten Berechtigungsnachweise unter Verwendung der Verschlüsselungssicherheitsinformation zu sichern, um eine verarbeitete Authentifizierung zu erzeugen, und wobei vorzugsweise der Prozessor weiter betriebsfähig ist zum Entschlüsseln der identifizierten Berechtigungsnachweise aus einem ersten Verschlüsselungszustand,
wenn in dem sicheren Speicher gespeichert, und Verschlüsseln der entschlüsselten identifizierten Berechtigungsnachweise unter Verwendung der Verschlüsselungssicherheitsinformation in einen zweiten verschlüsselten Zustand; und zum Weiterleiten der verarbeiteten Authentifizierung an eine Computervorrichtung (500) durch das Nahbereichs-Kommunikationsteilsystem.

3. Die Vorrichtung gemäß Anspruch 2, die weiter aufweist:
eine Benutzereingabeschnittstelle; und
wobei der Prozessor betriebsfähig ist zum Ausführen der Anweisungen,
um eine Benutzereingabe über die Benutzereingabeschnittstelle anzufordern und zu erfordern, bevor die Vorrichtung die verarbeitete Authentifizierung weiterleitet; und
vorzugsweise weiter aufweist:
wobei der Prozessor betriebsfähig ist zum Empfangen der Benutzereingabe über die Benutzereingabeschnittstelle, Vergleichen der Benutzereingabe mit einer vordefinierten Benutzereingabe, die auf der Vorrichtung gespeichert ist, und Weiterleiten der verarbeiteten Authentifizierung, wenn die Benutzereingabe der vordefinierten Benutzereingabe entspricht.

4. Ein Authentifizierungsserver (700), der aufweist:
ein Kommunikationsteilsystem in Kommunikation mit einem Netzwerk und einem drahtlosen Netzwerk (200);
einen Datenspeicher;
einen Prozessor in Kommunikation mit dem Kommunikationsteilsystem und dem Datenspeicher, wobei der Prozessor betriebsfähig ist zum Ermöglichen für den Authentifizierungsserver (700) eines Empfangens einer Zugriffsanforderung auf eine Online-Ressource von einer Computervorrichtung (500) über das Netzwerk, Vergleichen der Anforderung mit Information, die in dem Datenspeicher gespeichert ist,
um Anmeldungs-Berechtigungsnachweise zu identifizieren, die der Anforderung entsprechen, und Erzeugen einer Authentifizierung und einer Entschlüsselungssicherheitsinformation in Bezug auf die Authentifizierung;
wobei der Prozessor weiter betriebsfähig ist zum Ermöglichen für den Authentifizierungsserver (700) zum Weiterleiten der Authentifizierung an eine mobile Kommunikationsvorrichtung (100) in Kommunikation mit dem drahtlosen Netzwerk (200) und Weiterleiten der Entschlüsselungssicherheitsinformation in Reaktion auf die Anforderung über das Netzwerk; und
entweder der Prozessor betriebsfähig ist zum Verschlüsseln der Berechtigungsnachweise, um die Authentifizierung zu erzeugen, derart,
dass die Authentifizierung unter Verwendung der Entschlüsselungssicherheitsinformation entschlüsselt werden kann; oder
der Prozessor betriebsfähig ist zum Erzeugen eines Identifizierers, der die Berechtigungsnachweise identifiziert, und zum Erzeugen von Verschlüsselungssicherheitsinformation in Bezug auf die Entschlüsselungssicherheitsinformation, um die Authentifizierung zu erzeugen, wodurch die Verschlüsselungssicherheitsinformation von der mobilen Kommunikationsvorrichtung (100) verwendet werden kann, um die Berechtigungsnachweise zu verschlüsseln, die von dem Identifizierer identifiziert werden, derart, dass die verschlüsselten identifizierten Berechtigungsnachweise unter Verwendung der Entschlüsselungssicherheitsinformation entschlüsselt werden können.

5. Eine Computervorrichtung (500), die aufweist:
eine Benutzereingabeschnittstelle, die ausgebildet ist zum Empfangen einer Eingabe von einem Benutzer;
ein Netzwerk-Kommunikationsteilsystem, das ausgebildet ist zum Kommunizieren mit einem Netzwerk;
ein Nahbereichs-Kommunikationsteilsystem, das ausgebildet ist zum Ermöglichen von Nahbereichs-Kommunikationen mit anderen Computervorrichtungen (500); und
einen Prozessor, der in betriebsfähiger Kommunikation mit der Benutzereingabeschnittstelle, dem Netzwerk-Kommunikationsteilsystem und dem Nahbereichs-Kommunikationsteilsystem ist, wobei der Prozessor betriebsfähig ist zum Ermöglichen für die Computervorrichtung (500) zum:
Empfangen einer Anforderung zum Zugreifen auf eine Online-Ressource,
die auf dem Netzwerk verfügbar ist, über die
Benutzereingabeschnittstelle;
Weiterleiten der Anforderung an einen Authentifizierungsserver (700) in dem Netzwerk;
Empfangen von Entschlüsselungssicherheitsinformation über das Netzwerk in Reaktion auf die weitergeleitete Anforderung und eine verarbeitete Authentifizierung von einer mobilen
Kommunikationsvorrichtung (100) durch das Nahbereichs-Kommunikationsteilsystem;
Verarbeiten der verarbeiteten Authentifizierung unter Verwendung der Entschlüsselungssicherheitsinformation, um Online-Ressource-Anmeldungs-Berechtigungsnachweise zu erlangen; und
Weiterleiten der Online-Ressource-Anmeldungs-Berechtigungsnachweise an die Online-Ressource, um den Benutzer zu authentifizieren und Zugriff auf die Online-Ressource zu erlangen.

6. Ein Verfahren zum Authentifizieren eines Benutzers, der einen Zugriff über eine Computervorrichtung (500), die mit einem Netzwerk verbunden ist, auf eine Online-Ressource anfordert, die von einem Server (600) gehostet wird, der über das Netzwerk erreichbar ist, wobei das Verfahren aufweist:
die Computervorrichtung (500) empfängt eine Online-Inhalt-Anforderung von dem Benutzer;
die Computervorrichtung (500) leitet die Anforderung an einen Authentifizierungsserver (700) weiter, der mit dem Netzwerk verbunden ist;
die Computervorrichtung (500) empfängt
Entschlüsselungssicherheitsinformation über das Netzwerk und empfängt eine verarbeitete Authentifizierung über ein Nahbereichs-Kommunikationsteilsystem;
die Computervorrichtung (500) verarbeitet die verarbeitete Authentifizierung unter Verwendung der
Entschlüsselungssicherheitsinformation, um Anmeldungs-Berechtigungsnachweise zu erlangen; und
die Computervorrichtung (500) leitet die Anmeldungs-Berechtigungsnachweise an den Server (600) über das Netzwerk weiter,
um den Benutzer zu authentifizieren.

7. Das Verfahren gemäß Anspruch 6, das weiter aufweist:
der Authentifizierungsserver (700) empfängt die Anforderung;
der Authentifizierungsserver (700) vergleicht die Anforderung mit gespeicherter Information, um Anmeldungs-Berechtigungsnachweise zu identifizieren;
der Authentifizierungsserver (700) leitet eine Authentifizierung an eine mobile Kommunikationsvorrichtung (100) über ein drahtloses Netzwerk (200) und Entschlüsselungssicherheitsinformation über das Netzwerk an die Computervorrichtung (500) weiter zum Entschlüsseln von verschlüsselten Anmeldungs-Berechtigungsnachweisen, die von der Anforderung identifiziert werden.

8. Das Verfahren gemäß Anspruch 6, das weiter aufweist:
eine mobile Kommunikationsvorrichtung (100) empfängt eine Authentifizierung, die Anweisungen umfasst, die einen Identifizierer und Verschlüsselungssicherheitsinformation aufweisen, von dem Authentifizierungsserver (700) über ein drahtloses Netzwerk (200);
die mobile Kommunikationsvorrichtung (100) verarbeitet die Authentifizierung durch Ausführen der Anweisungen, um Berechtigungsnachweise zu identifizieren, die auf der Vorrichtung gespeichert sind, und Verschlüsseln der identifizierten Berechtigungsnachweise, um die verarbeitete Authentifizierung zu erzeugen;
die mobile Kommunikationsvorrichtung (100) leitet die verarbeitete Authentifizierung über ein Nahbereichs-Kommunikationsteilsystem der mobilen Kommunikationsvorrichtung (100) an die Computervorrichtung (500) weiter; und/oder
die Anweisungen weisen eine Voraussetzung auf, um eine spezifizierte Benutzereingabe zu erlangen, und das Ausführen weist weiter auf, dass die mobile Kommunikationsvorrichtung (100) den Benutzer über eine spezifizierte Anforderung für eine Benutzereingabe benachrichtigt und die verarbeitete Authentifizierung an die Computervorrichtung (500) weiterleitet, wenn die angeforderte Eingabe empfangen wird.

## Revendications

1. Système d'authentification d'un utilisateur demandant accès, via un dispositif informatique (500) connecté à un réseau (800), à une ressource en ligne hébergée par un serveur (600) connecté au réseau (800), le système comprenant :
le dispositif informatique (500) ;
un dispositif de communication mobile (100) connecté à un réseau sans fil (200), le dispositif de communication mobile (100) étant en outre en mesure de communiquer par une liaison de communication à courte portée ;
un serveur d'authentification (700) connecté au réseau (800) et en communication avec le dispositif de communication mobile (100) via le réseau sans fil (200) ;
dans lequel le serveur d'authentification (700) est en mesure de recevoir une demande d'accès à une ressource en ligne via le réseau (800), de traiter la demande et, si la demande est vérifiée, d'acheminer une authentification au dispositif de communication mobile (100) à l'aide du réseau sans fil (200) ainsi que de renvoyer des informations de sécurité et de déchiffrement intéressant l'authentification via le réseau (800), en réponse à la demande ;
dans lequel le dispositif de communication mobile (100) est connecté au réseau sans fil (200) et est en mesure de recevoir l'authentification via le réseau sans fil (200), de traiter l'authentification et d'acheminer l'authentification traitée au dispositif informatique (500) via la liaison de communication à courte portée ; et
le dispositif informatique (500) est en mesure de recevoir la demande d'accès à la ressource en ligne provenant de l'utilisateur et d'acheminer la demande au serveur d'authentification (700) et est en mesure de communiquer par la liaison de communication à courte portée et de recevoir l'authentification traitée sur la liaison de communication à courte portée en provenance du dispositif de communication mobile (100) ; et
dans lequel le dispositif informatique (500) est en outre en mesure de recevoir les informations de sécurité et de déchiffrement sur le réseau (800), de traiter l'authentification traitée à l'aide des informations de sécurité et de déchiffrement pour obtenir un authentifiant d'ouverture de session pour la ressource en ligne et d'acheminer l'authentifiant d'ouverture de session pour la ressource en ligne vers le serveur (600), sur le réseau, pour accéder à la ressource en ligne.

2. Dispositif de communication mobile (100), comprenant :
un sous-système de communication conçu pour communiquer sur un réseau sans fil (200) ;
un sous-système de communication à courte portée, conçu pour permettre des communications à courte portée ;
un processeur, en communication avec le sous-système de communication et avec le sous-système de communication à courte portée ;
un dispositif de mémoire sécurisée en communication avec le processeur ;
le processeur étant en mesure de permettre au dispositif de :
recevoir une authentification par le sous-système de communication, l'authentification comprenant des informations pour identifier un authentifiant d'ouverture de session pour la ressource en ligne dans le dispositif de mémoire sécurisée et incluant des instructions comportant des informations de sécurité et de chiffrement à exécuter par le dispositif ;
traiter l'authentification et exécuter les instructions afin que le processeur soit en outre en mesure de traiter les informations pour localiser l'authentifiant identifié et sécuriser l'authentifiant identifié en utilisant les informations de sécurité et de chiffrement afin de créer une authentification traitée, et de préférence dans lequel le processeur est en outre en mesure de déchiffrer l'authentifiant identifié à partir d'un premier état de chiffrement lorsqu'il est stocké dans le dispositif de mémoire sécurisée et de chiffrer l'authentifiant identifié et déchiffré à l'aide des informations de sécurité et de chiffrement pour le placer dans un second état de chiffrement ; et d'acheminer l'authentification traitée vers un dispositif informatique (500) via le sous-système de communication à courte portée.

3. Dispositif selon la revendication 2, comprenant en outre :
une interface d'entrée par l'utilisateur ; et
dans lequel le processeur est en mesure d'exécuter les instructions pour demander et exiger une entrée de l'utilisateur sur l'interface d'entrée par l'utilisateur, avant que le dispositif n'achemine l'authentification traitée ; et
dans lequel de préférence le processeur est en mesure de recevoir l'entrée de l'utilisateur sur l'interface d'entrée par l'utilisateur, de comparer l'entrée de l'utilisateur avec une entrée d'utilisateur prédéfinie qui est stockée sur le dispositif et d'acheminer l'authentification traitée si l'entrée de l'utilisateur coïncide avec l'entrée d'utilisateur prédéfinie.

4. Serveur d'authentification (700), comprenant :
un sous-système de communication qui communique avec un réseau et un réseau sans fil (200) ;
une mémoire de données ;
un processeur, qui communique avec le sous-système de communication et la mémoire de données, le processeur étant en mesure de permettre au serveur d'authentification (700) de recevoir une demande d'accès à une ressource en ligne en provenance d'un dispositif informatique (500) sur le réseau, de comparer la demande à des informations gérées dans la mémoire de données pour identifier un authentifiant d'ouverture de session qui correspond à la demande et de produire une authentification et des informations de sécurité et de déchiffrement intéressant l'authentification ;
le processeur étant en outre en mesure de permettre au serveur d'authentification (700) d'acheminer l'authentification vers un dispositif de communication mobile (100) en communication avec le réseau sans fil (200) et d'acheminer les informations de sécurité et de déchiffrement en réponse à la demande sur le réseau ; et
soit le processeur est en mesure de chiffrer l'authentifiant pour produire l'authentification, si bien que l'authentification peut être déchiffrée à l'aide des informations de sécurité et de déchiffrement ;
soit le processeur est en mesure de produire un identificateur qui identifie l'authentifiant et de produire des informations de sécurité et de chiffrement liées aux informations de sécurité et de déchiffrement, de produire l'authentification, les informations de sécurité et de chiffrement pouvant être utilisées par le dispositif de communication mobile (100) pour chiffrer l'authentifiant identifié par l'identificateur, si bien que l'authentifiant identifié et chiffré peut être déchiffré à l'aide des informations de sécurité et de déchiffrement.

5. Dispositif informatique (500), comprenant :
une interface d'entrée par l'utilisateur, conçue pour recevoir une entrée de l'utilisateur ;
un sous-système de communication en réseau conçu pour communiquer avec un réseau ;
un sous-système de communication à courte protée conçu pour permettre des communications à courte portée avec d'autres dispositifs informatiques (500) ; et
un processeur en mesure de communiquer avec l'interface d'entrée par l'utilisateur, le sous-système de communication en réseau et le sous-système de communication à courte portée, le processeur étant en mesure de permettre au dispositif informatique (500) de :
recevoir une demande d'accès à une ressource en ligne disponible sur le réseau, via l'interface d'entrée par l'utilisateur ;
acheminer la demande à un serveur d'authentification (700) via le réseau ;
recevoir des informations de sécurité et de déchiffrement par le réseau en réponse à la demande acheminée et une authentification traitée en provenance d'un dispositif de communication mobile (100), via le sous-système de communication à courte portée ;
traiter l'authentification traitée à l'aide des informations de sécurité et de déchiffrement pour obtenir un authentifiant d'ouverture de session pour la ressource en ligne ; et
acheminer l'authentifiant d'ouverture de session pour la ressource en ligne vers la ressource en ligne, pour authentifier l'utilisateur et obtenir accès à la ressource en ligne.

6. Procédé d'authentification d'un utilisateur demandant accès, via un dispositif informatique (500) connecté à un réseau, à une ressource en ligne hébergée par un serveur (600) accessible via le réseau, le procédé comprenant les étapes consistant à :
recevoir, par le dispositif informatique (500), une demande de contenu en ligne en provenance de l'utilisateur ;
acheminer la demande par le dispositif informatique (500) vers un serveur d'authentification (700) connecté au réseau ;
recevoir, par le dispositif informatique (500), des informations de sécurité et de déchiffrement sur le réseau et une authentification traitée sur un sous-système de communication à courte portée ;
traiter, par le dispositif informatique (500), l'authentification traitée à l'aide des informations de sécurité et de déchiffrement pour obtenir un authentifiant d'ouverture de session ; et
acheminer l'authentifiant d'ouverture de session par le dispositif informatique (500) vers le serveur (600), via le réseau, afin d'authentifier l'utilisateur.

7. Procédé selon la revendication 6, comprenant en outre les étapes consistant à :
recevoir la demande par le serveur d'authentification (700) ;
comparer la demande par le serveur d'authentification (700) avec des informations sauvegardées afin d'identifier un authentifiant d'ouverture de session ;
acheminer, par le serveur d'authentification (700), une authentification vers un dispositif de communication mobile (100) sur un réseau sans fil (200) et des informations de sécurité et de déchiffrement vers le dispositif informatique (500) sur le réseau, pour le déchiffrement de l'authentifiant chiffré d'ouverture de session qui est identifié par la demande.

8. Procédé selon la revendication 6, comprenant en outre les étapes consistant à :
recevoir, par un dispositif de communication mobile (100), une authentification qui comprend des instructions comportant un identificateur et des informations de sécurité et de chiffrement, en provenance du serveur d'authentification (700), sur un réseau sans fil (200) ;
traiter l'authentification par le dispositif de communication mobile (100) en exécutant les instructions pour identifier un authentifiant stocké sur le dispositif et en chiffrant l'authentifiant identifié pour créer l'authentification traitée ;
acheminer l'authentification traitée par le dispositif de communication mobile (100), sur un sous-système de communication à courte portée du dispositif de communication mobile (100), vers le dispositif informatique (500) ; et/ou
les instructions comprenant une exigence consistant à obtenir une entrée spécifiée de l'utilisateur et l'exécution comprenant en outre l'étape consistant à notifier à l'utilisateur, par le dispositif de communication mobile (100), la demande spécifiée d'entrée par l'utilisateur et à acheminer l'authentification traitée au dispositif informatique (500) si l'entrée demandée est obtenue.
